Europäisches Patentamt

European Patent Office

Office européen des brevets

(11) Publication number: **0 432 904 A2**

## EUROPEAN PATENT APPLICATION

(21) Application number: 90312384.2

(22) Date of filing: 13.11.90

(51) Int. Cl.5: **H01R 9/05**

(30) Priority: **15.11.89 US 436825**

(43) Date of publication of application:
**19.06.91 Bulletin 91/25**

(84) Designated Contracting States:
**AT BE CH DE DK ES FR GB IT LI NL SE**

(71) Applicant: **RAYCHEM CORPORATION (a Delaware corporation)**
**300 Constitution Drive**
**Menlo Park, California 94025(US)**

(72) Inventor: **Moheban, Manoo Chehr**
**5036 Compo Road**
**Woodland Hills, California 91364(US)**
Inventor: **Kellar, Bradford**
**4341 Miranda Avenue**
**Palo Alto, California 94306(US)**

(74) Representative: **Jones, David Colin et al**
**Raychem Limited Intellectual Property Law**
**Department Faraday Road Dorcan**
**Swindon, Wiltshire SN3 5HH(GB)**

(54) Cable television connection system.

(57) A cable signal distribution system provides means for protecting against induced voltages in the shield of a subscriber cable. The system also provides a low loss, low reflectance signal tap, and also provides method and apparatus for imposing on a subscriber cable sufficient power to operate electronics integrated into the cap.

EP 0 432 904 A2

# CABLE TELEVISION CONNECTION SYSTEM

### Field of the Invention

The present invention relates to systems for providing a cable television or other signal from a supply cable to a subscriber.

### Background of the Invention

Cable television systems have become a standard method for distributing television signals within many communities. However, while such distribution systems offer many advantages, they do present certain technical challenges.

One of the difficulties existing with many cable distribution systems is longitudinal induced voltage. Longitudinal induced voltage results from a variation in the earth's potential voltage. Such variations can occur for a number of reasons, including large RF signals, ground faults, or current surges. When such events occur, a voltage can be induced across the shield of cables such as those carrying cable television signals. In some instances, the longitudinal induced voltage is sufficient to start fires, and some residences have burned down as the result of such induced voltages. Although each subscriber drop is now required to be grounded, fires remain possible due to such induced voltages.

Another challenge presented by existing cable television distribution systems is the derivation of a signal, suitable for use by a single subscriber, without causing substantial adverse affects on the signal transmitted by the main cable. In current systems, great care must be taken to avoid signal reflection in the main cable at the point where the tap for an individual subscriber's drop is taken. In addition, because of the manner in which the subscriber signal is derived, proper signal attenuation must be provided on the subscriber line. In general, these problems are solved by a cumbersome method of cutting the primary cable at the point where each subscriber's tap will be taken, inserting a special connector, and reconnecting the main cable to either side of the connector. To provide proper signal to the subscriber, each tap within a single cable run most have a different impedance. Thus, the tap for each subscriber on a single line must be coded for installation at a specific location, and cannot be used properly at any other location on that line. This necessarily greatly increases expense and complexity for the cable signal system. In addition, the attenuation in existing cables, combined with the signal amplitude required to operate existing taps, limits the range of cable which can be used between amplifiers. This requires additional ampifiers, with their associated problems of cost and noise injection.

Still another limitation of existing cable signal distribution systems is limited signal bandwidth. Existing systems typically provide a bandwidth substantially less than 500 or 600 MHz, whereas future television systems will be required to provide a bandwidth of at least 800 MHz.

Yet another limitation of prior art cable signal distribution systems is the lack of power available at the cable tap. In existing systems, the only power available at the cable tap is the video signal. Such signals are relatively low power and provide essentially no usable power for operation of electronic circuitry.

Finally, another challenge presented by existing cable signal distribution systems is signal theft. In present systems, signal theft is relatively simple because cable system drops, once installed in a subscriber's location, usually are disconnected by simple mechanical means. Such signal theft represents substantial lost revenue to the cable television companies.

There has therefore been a longfelt need for a cable distribution system which provides protection against fires started due to longitudinal induced voltage, and also provides a simple method of connecting a subscriber drop which is reliable but does not require a different connector for each subscriber in a line.

### Summary of the Invention

The aforementioned limitations of the prior art are substantially overcome by the present invention, which provides a cable distribution system substantially protected from fires caused by longitudinal induced voltage. At the same time, related aspects of the invention provide a method for simply but reliably connecting a subscriber drop to a main distribution cable by means which do not need to be uniquely selected for location on the line. A variety of embodiments are disclosed.

In a first aspect of the invention, a positive temperature coefficient (PTC) resistor is placed in series between the grounding line and shield for the coaxial cable which forms the main distribution cable for a TV or similar signal distribution system. In the event a voltage is induced through the ground shield of the coaxial cable, the PTC resistor heats up and increases in resistance. If the voltage continues to appear on the shield, the PTC resistor continues to heat until it becomes an open circuit and disconnects the shield from the ground loop. Once the induced voltage is removed, the PTC resistor eventually returns to its original resistance, and the cable shield is reconnected to the ground loop.

In another aspect of the invention, a cable tap is provided which does not require cutting of the main distribution cable and at the same time permits a single type of tap to be used throughout a single distribution line. Additionally, a variety of cable taps are described which offer lower reflectance than those in the prior art.

A further aspect of the invention provides a method by which power can be supplied to each tap for operation of a variety of types of electronics contained within the subscriber tap. The ability to provide power at the signal tap provides, among other uses, the ability to affirmatively turn off the signal to a former or potential subscriber, thereby significantly reducing the likelihood of signal theft.

A further benefit of the present invention is that it extends the usable range of the existing primary cable significantly, which correspondingly reduces the number line amplifiers required to be used in the main cable.

It is therefore one object of the present invention to provide a cable distribution system which substantially reduces the risk of harm due to longitudinal induced voltage.

It is another object of the present invention to provide a cable distribution system in which the signal bandwidth can be at least 500 MHz.

Still another object of the present invention is to provide a cable distribution system in which the subscriber tap is not required to be specially designed for the location in the line.

A further object of the present invention is to provide usable power to the cable tap to permit powering of appropriate electronics at the tap.

A still further object of the present invention is to provide a cable tap which produces very little loss and reflection.

A further object of the present invention is to provide a cable tap which can be easily attached to the main distribution cable without requiring cutting of the main distribution cable.

These and other objects of the present invention can be better appreciated from the following detailed description of the invention, taken together with the appended Figures.

## Figures

Figure 1 is a simplified perspective view of a cable distribution system according to the present invention.

Figure 2a is top plan view of a signal distribution box according to the present invention.

Figure 2b is a side elevational view of the distribution box of Figure 2a.

Figure 2c is a left end view of the distribution box of Figure 2a.

Figure 3a is a schematic diagram of the distribution box of Figure 2a.

Figure 3b is an exploded view of the connection of a PTC resistor to the grounded shield of a subscriber cable.

Figure 4a is a perspective view of a cable tap according to the present invention, with the cover open.

Figure 4b is a perspective view of the main disctribution cable of Figure 1 readied for insertion into the cable tap of Figure 4a.

## Detailed Description of the Invention

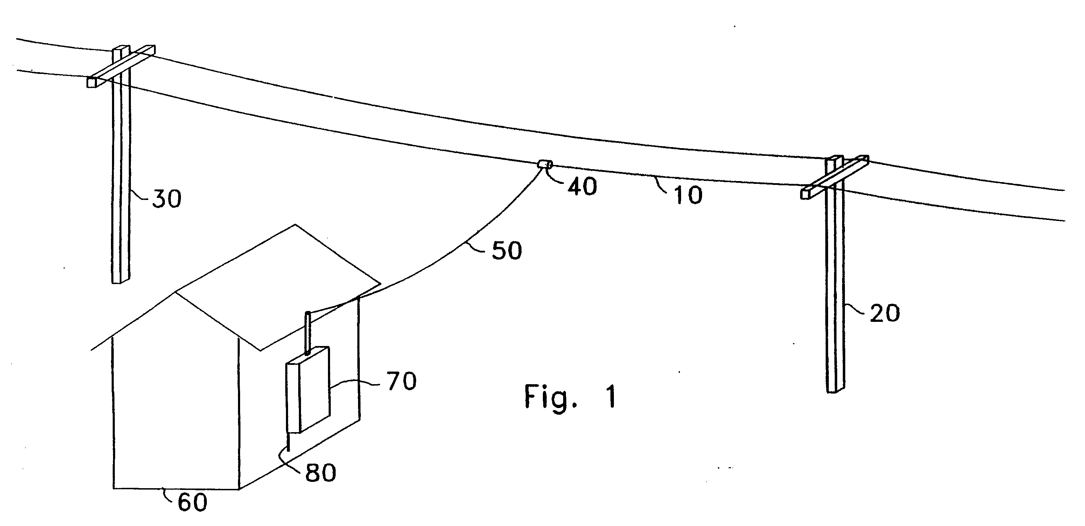

Referring first to Figure 1, a cable distribution system in accordance with the present invention can be appreciated. A main distribution cable 10 is, for example, carried on utility poles 20 and 30. A cable tap 40 connects to the main distribution cable 10 and provides a connection for a subscriber cable 50. Both the main distribution cable 10 and the subscriber cable 50 are typically 75 ohm coaxial cables with an outer shield and an inner conductor.

The subscriber cable connects into a home 60 by means of a distribution box 70, shown oversized in Figure 1, and mounted on the wall of the home 60. At least a signal cable 80, also typically coaxial, extends from the distribution box 70 into the home 60. In some instances, low voltage power may also be supplied along cable 80, which may alternatively be a multiconductor cable in such instances, to the distribution box 70. Such low voltage power may be provided by means of a conventional low voltage transformer (not shown) which may be plugged into a conventional power outlet either inside or outside of the home 60. In some instances, it may also be desirable or required to provide an earth ground connection to the shield of the cable 50, which may be accomplished at grounding rod 90.

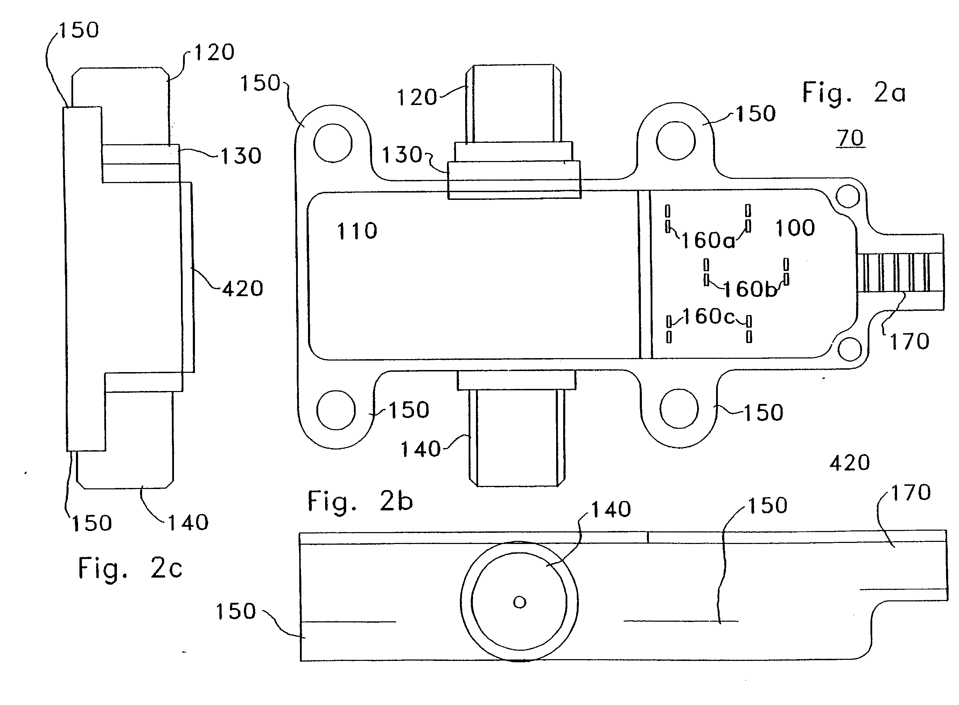

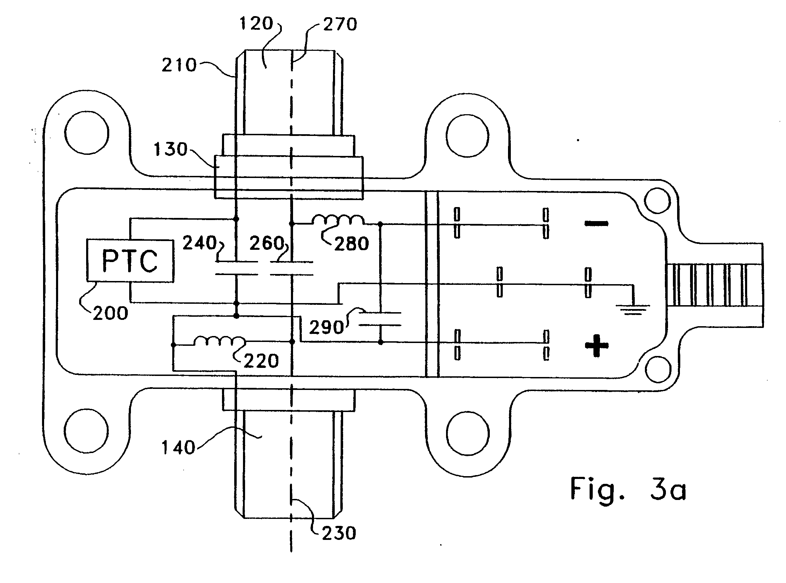

Referring next to Figures 2a-2c and Figures 3a-3b, the operation of the distribution box of the present invention may be better understood. Mechanically, as shown in Figures 2a-2c, the distribution box 70 comprises a low voltage section 100 and an RF section 110. Although shown open in Figures 2a-2c, the RF section will typically be enclosed by permanently affixing a cover thereon by any suitable means. The distribution box 70 is preferably comprised of conductive materials such as aluminum. brass, steel, or similar conductors.

The subscriber cable 50 will connect to an RG-59 or other suitable connector 120. The connector 120 is insulated from the box 70 by means of insulator 130. The signal cable 80 connects to another RG-59 or other suitable connector 140. Mechanical mounting tabs 150 may be provided for mounting the distribution box to the side of the house 60.

The low power side 100 of the distribution box 70 comprises simply three power connection tabs 160a, 160b and 160c. A ground wire is preferably connected to the middle connection tab 160b, while low power leads may be connected to the tabs 160a and 160c. Power will typically be supplied from the home 60 by means of a conventional multiconductor wire (see Figure 3a), such as #18 AWG three conductor or comparable. Strain relief for the wire may be provided by strain relief means 170, built into the distribution box 70 and its cover 180, seen best in Figure 2b.

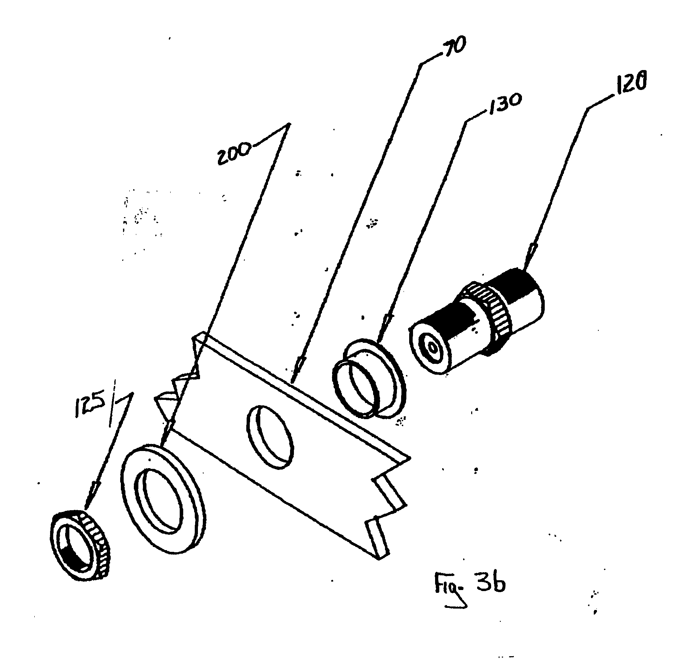

Referring specifically to Figures 3a and 3b, the electrical circuitry of the present invention may be better understood. The power and ground connection tabs 160a-c can be seen connected to power leads schematically, although in actual application a multiconductor wire will extend out of the distribution box 70 through the strain relief means 170. One side of a PTC resistor 200 is connected to the shield side 210 of the connector 120, and may be formed as a disc compressed against the side of the distribution box 70 by means of a nut 125 as shown in Figure 3b. The other side of the PTC resistor 200 is connected to the shield side of the connector 140. In some instances, it may also be desirable to connect the second side of the PTC resistor 200 to the positive connection tab 160c, to provide protection for the low power line in the event of a short circuit. Such a connection is possible since the lower power supply is fully isolated. An inductor 220 is connected between the ground connection point of the FTC 200 and the signal connection side 230 of the signal connector 140. A capacitor 240 is connected in parallel with the PTC 200.

A capacitor 260 is connected between the signal side 270 of the connector 120 and the signal side 230 of the connector 140. Another inductor 280 is connected between the signal side 270 of the connector 120 and the power lead connected to tab 160a. A capacitor 290 is connected across the tabs 160a and 160c. The capacitors and inductors can be seen to form a low pass filter. Nominal values of the inductors 220 and 280 are 20 microhenries, while nominal values for the capacitors 240 and 260 are about five nanofarads. The nominal value of the capacitor 290 is 0.1 microfarads.

The function of the PTC resistor 200 can now be appreciated. The PTC resistor will preferably be designed to have a resistance slightly higher than the shield resistance of the subscriber cable 50. In the event a voltage is induced through the ground loop into the shield of the cable 50, the PTC will begin to heat and increase in resistance. Should the induced voltage continue and reach a dangerous level, the PTC resistor will open, disconnecting the shield from the ground loop and preventing a the possibility of a fire or other damage. The PTC will remain open as long as the induced voltage remains. Once the source of the induced voltage disappears, the PTC will begin to cool and, after a suitable period of time the PTC resistance with return to its original, low value. The shield will then be reconnected into the ground loop. In this manner a substantial reduction of fire hazard is provided.

Additionally, power may be supplied to the cable tap 40 by means of the power leads connected at connection tabs 160a and 160c. As previously noted, the power connected to the distribution box will in nearly all instances be low voltage, low current power. The power supplied to the distribution box can be either AC or DC. This power can be seen from the schematic of Figure 3a to be connected across the shield and signal conductor of the connector 120, which means that power is provided to the subscriber cable 50 and the cable tap 40. Once power can be safely delivered to the cable tap 40, it becomes possible to combine functions performed by the tap, including amplifying the signal, sharing the same electronics by several drops, or performing security functions. Also, it becomes possible to decompress a compressed digital video signal, or to perform a digital to analog or similar conversion. Further, it becomes possible to interface with a binary digital, quarnary digital, or other digital or combined digital/analog transmission formats. It also becomes possible to interdict or otherwise encode, such as combined by digital and analog signals, premium channels.

Having power supplied reliably to the tap 40 also permits broadband transmission down the drop at a high signal strength to overcome high drop loss. Still further, having power supplied at the drop permits subscriber signals to be transmitted onto the primary, or distribution, cable 10, and also permits telephone signals to be carried on the primary cable 10.

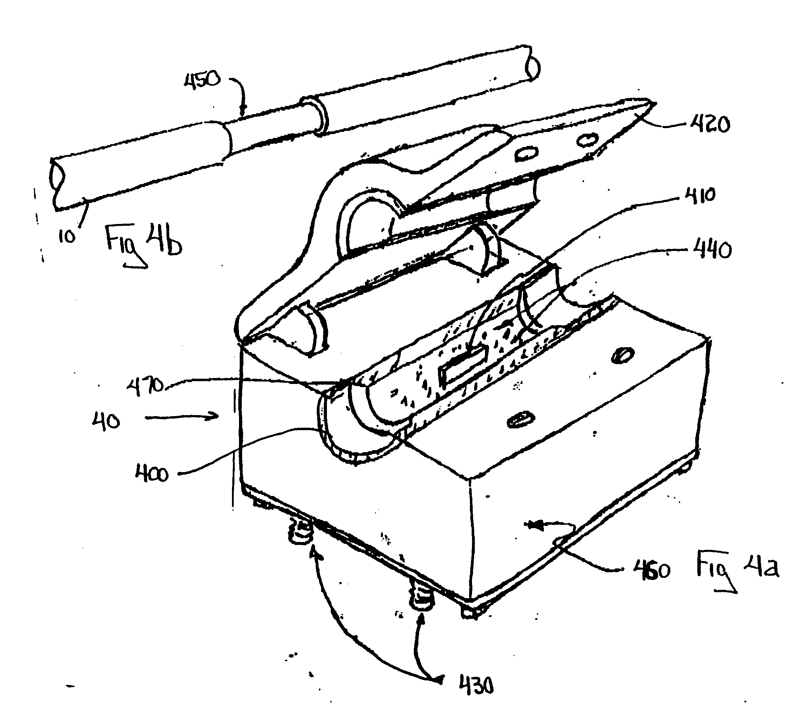

Referring now to Figure 4a and Figure 4b, the cable tap 40 of the present invention may be appreciated. The perspective view of the cable tap 40 shown in Figure 4a, taken together with the perspective view of the distribution cable 10 shown in Figure 4b, shows that a cylindrical receiving portion 400 is provided for receiving the coaxial main distribution cable 10. A signal tap 410 is located within the receiving portion 400 for placement inside the shield of the main cable 10. The signal probe or pickup 410 is juxtaposed either adjacent to or in contact with the inner conductor of the cable 10, depending upon the type of pickup used. A plurality of ground pins 440 help to fixedly position the cable 10 within the receptable 400, and also make contact with the shield of the coaxial cable 10. A router may be used to create a suitable receptacle within the cable 10, such as by routing off the shield from a portion of the cable 10, as shown at 450 in Figure 4b. Appropriate amplifiers or convertors may be included within the tap 40 in the area indicated generally at 460 in Figure 4a. To attach the receiving portion 400, and a cover 420 of the tap 40 to the cable 10, while at the same time sealing against RF leakage and reconstituting the cable 10, Raychem Corporation's ULTRAFUSE technology may be used. Alternatively, a suitable sealing gel 470 such as Raychem products AMIS, FASTRACK, RAYHAB or TERMSEAL may be used to seal against RF leakage between the cable 10, the receiving portion 400 of the tap and the cover 420. To prevent RF leakage either out of the tap or into the tap, the spaces can be filled with a ferrite loaded material or conductive materials to accomplish either magnetic or electrical sealing.

The signal tap 410 may be any of a variety of contact and non-contact designs. Non-contact designs include dipoles, inductive loops and capacitively coupled devices or other devices capable of interacting with the electric or magnetic field generated by the signal carried by the primary cable 10. Each of these signal taps 410 basically acts as an antenna, and can be inserted in a relative small intrusion into the insulation around the conductor within the primary distribution cable 10.

The quality of the signal detected by magnetically coupled devices such as inductive loops varies substantially with frequency. To improve response and sensitivity, larger loops with multiple turns can be employed; such loops are preferably isolated to reduce capacitive interaction between the loops. Magnetic coupling can also be enhanced by depositing materials having high magnetic permeability near the loops. One method for fabrication of such a signal tap 410 includes thin film processing.

Alternatively, integrated circuits capable of detecting either the magnetic or electric fields generated by the conductor of the primary cable can be inserted into the primary cable 10 to form the signal tap 410. Since some designs for the signal tap 410 work best at relatively lower frequencies, while other designs work best at relatively higher frequencies, it may be desirable in some instances to provide a combination of more than one design in the signal tap 410. Then, depending upon the frequency range of the signal being detected, one of the pickups can be selected for use.

The signal derived via the inductive or other non-contact pickup 410 may then be amplified as desired, remembering that suitable power is now available at an RG-59 connector 430 or other suitable connector which forms part of the cable tap 40. Multiple connectors 430 may be desirable in some instances. Such amplification may be particularly desirable for frequencies in the range of 500 MHz -1000 MHz, since "air core" pickups capable of working in such frequency ranges have low signal strength compared to ferrites which work at lower frequencies.

As an alternative to non-contact probes, contact probes may be desirable in some instances. While strong signals can be detected by a DC contact with the inner conductor of the primary cable 10, such an approach suffers from problems of strong reflectance and variable contact resistance. A contact probe having a dielectric layer between the inner conductor and the pickup can be used to provide good RF and physical contact. Signals provided by contact probes may also be amplified.

Having fully disclosed one embodiment of the invention, it will be appreciated by those skilled in the art, given the teachings herein, that numerous alternatives and equivalents exist which do not depart from the present invention. It is therefore to be understood that the present invention is not to be limited by the foregoing description, but only by the appended claims.

## Claims

1. A cable tap for detecting signals from a coaxial cable comprising
receiving means for receiving a coaxial cable comprising an inner conductor and an outer shield,
signal pickup means attached to the receiving means for insertion within the outer shield of the coaxial cable and at least adjacent to the inner conductor, and
cover means for maintaining the position of the coaxial cable relative to the signal pickup means.

2. The invention of claim 1 wherein the signal pickup means is an inductive pickup.

3. The invention of claim 1 wherein the signal pickup means is a capacitive pickup.

4. The invention of claim 1 wherein the signal pickup means is a dipole.

5. A cable signal distribution system comprising input means having a conductor and a shield for receiving a signal on a coaxial cable,
output means having a conductor and a shield for receiving a signal on a coaxial cable,
resistive means having a positive temperature coefficient connected between the shield of the input means and the shield of the output means.

6. A cable signal distribution system comprising

a power source for supplying voltage,
distribution means having a first receiving means for receiving a coaxial signal thereon, and second receiving means for receiving power thereon,
means connecting the power source to the second receiving means of the distribution means, and
filter means connected between the second receiving means and the first receiving means for imposing the voltage supplied by the power source onto the first receiving means.

Fig. 1

EP 0 432 904 A2

Fig. 2a  70

Fig. 2b

Fig. 2c

100  160a  160b  160c  110  120  130  140  150  170  420

8

Fig. 3a

EP 0 432 904 A2

Fig. 3b

450

420

410

440

10  Fig 4b

470

40

400

460  Fig 4a

430

EP 0 432 904 A2